# EUROPÄISCHE PATENTSCHRIFT

(11) **EP 3 645 360 B1**
(45) Veröffentlichungstag und Bekanntmachung des Hinweises auf die Patenterteilung: **31.03.2021**
(21) Anmeldenummer: 18705072.9
(22) Anmeldetag: 03.01.2018
(51) Int. Cl.: B60T 17/22, G01B 5/245, G01B 11/27, G01B 7/315, F16D 65/12, G01B 11/02, G01B 7/28, G01B 7/34, G01B 5/00

(54) **VERFAHREN UND VORRICHTUNG ZUR ERMITTLUNG EINER LAGEABWEICHUNG EINES ROTATIONSKÖRPERS**
METHOD AND DEVICE FOR ASCERTAINING A POSITIONAL DEVIATION OF A ROTATIONAL BODY
PROCÉDÉ ET DISPOSITIF POUR DÉTERMINER UN ÉCART DE POSITION D'UN CORPS ROTATIF

(30) Priorität: 28.06.2017 DE 102017114378
(43) Veröffentlichungstag der Anmeldung: 06.05.2020
(73) Patentinhaber: Ferquest GmbH, 42555 Velbert (DE)
(72) Erfinder: SCHNAASE, René, 42555 Velbers (DE); WEIHRAUCH, Jens, 28844 Weyhe (DE)
(74) Vertreter: Gottfried, Hans-Peter
(86) Internationale Anmeldenummer: PCT/DE2018/100002
(87) Internationale Veröffentlichungsnummer: WO 2019/001606

(56) Entgegenhaltungen:
- WO-A1-99/63353
- DE-A1-102015 014 840
- US-A1- 2014 352 417
- US-B1- 7 222 521
- US-B1- 7 437 917

## Beschreibung

Die Erfindung betrifft ein Verfahren und eine Vorrichtung zur Ermittlung einer Lageabweichung eines um eine Rotationsachse rotationsfähigen Rotationskörpers gegenüber einer Bezugsfläche, insbesondere zur gleichzeitigen Ermittlung von zumindest Achsenrechtwinkligkeit und Rotationsflächenschlag, und eine Kalibriereinrichtung, die mit einer Vorrichtung dieser Art verbindbar ist.

Die besondere Herausforderung auf dem Gebiet der Erfindung liegt darin begründet, dass unterschiedliche Form- und Lagetoleranzen der zusammengefügten Bauteile zu einem einheitlichen Fehlerbild beitragen und trotzdem die Ursachen getrennt ermittelt und betrachtet werden sollen.

Ein wichtiger zu ermittelnder Fehler stellt eine Abweichung von der Rechtwinkligkeit zwischen der Rotationsachse des Rotationskörpers und der Bezugsfläche dar, der einer zumindest mittleren Abweichung der Parallelität von Bezugsfläche und einer Flachseite des Rotationskörpers entspricht. Zur besseren Unterscheidung wird diese Lageabweichung nachfolgend als Achsenrechtwinkligkeit bezeichnet.

Weiterhin kann sich der momentane Winkel zwischen der rotierenden Fläche und der unbeweglichen Bezugsfläche während der Umdrehung ändern, wenn eine Abweichung in der Rechtwinkligkeit zwischen der rotierenden Fläche und der Rotationsachse, somit ein Rotationsflächenschlag, vorliegt.

Ein Fehler im Planlauf kann, neben Toleranzen in der Ebenheit der vermessenen Flachseite, außerdem in der Parallelität der beiden Flachseiten des Rotationskörpers, nachfolgend zur besseren Unterscheidung als Flächenparallelität bezeichnet, zueinander begründet liegen. Abweichungen hierin führen zu einer über den Umfang und an verschiedenen Radien des rotierenden Objekts hinweg veränderlichen Dicke.

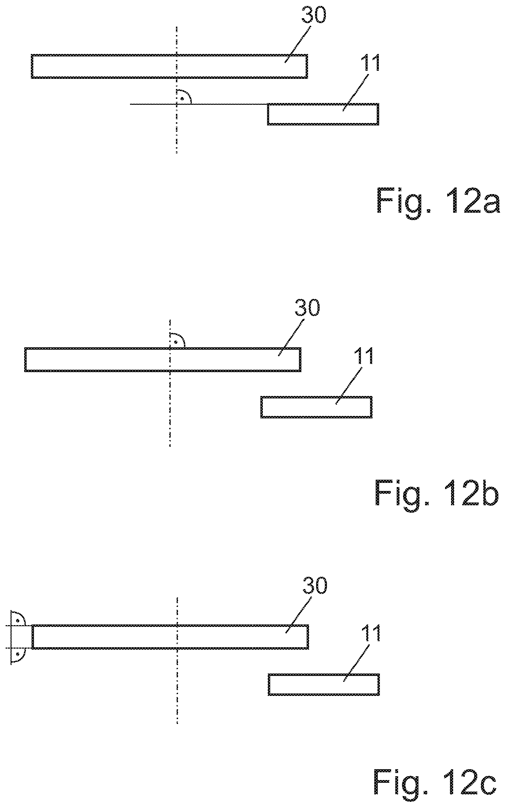

Alle die vorgenannten Lagetoleranzen, Achsenrechtwinkligkeit, Rotationsflächenschlag und Flächenparallelität, stehen in engem Zusammenhang miteinander, siehe zum besseren Verständnis Fig. 12a zur Achsenrechtwinkligkeit, Fig. 12b zum Rotationsflächenschlag und Fig. 12c zur Flächenparallelität, jeweils symbolisiert dargestellt.

Deshalb ist es schwierig, eine der Lagetoleranzen getrennt zu ermitteln, insbesondere nachdem sich im montierten Gesamtsystem unterschiedliche Toleranzen aufsummiert haben. Eine Überschreitung der Toleranzen ist jedoch von erheblichem Nachteil, weil die Stellung des Rotationskörpers gegenüber der Bezugsfläche in aller Regel bedeutsam ist, wobei sich die nachteiligen Effekte je nach Einsatzfall unterscheiden, zumeist aber zu unerwünschten Schwingungen führen.

Ein wichtiges Einsatzgebiet der Ermittlung der Achsenrechtwinkligkeit sowie der weiteren vorgenannten Werte sind Scheibenbremsen, weil die Stellung der Bremsscheibe gegenüber dem Bremssattel bedeutsam ist. Anderenfalls werden die Kräfte beim Bremsen in den Bremssattel, den Bremssattelsitz und letztlich in die Achse ungleichmäßig abgeleitet und führen in der Folge zu unerwünschten Schwingungen im gesamten System.

Aus dem Stand der Technik sind verschiedene Lösungen bekannt, die sich der Problematik annähern, eine rotierende Fläche in Bezug auf eine gegenüber dem rotierenden System unbewegliche Fläche zu vermessen.

So beschreibt die Druckschrift DE 198 53 078 C1 eine Messeinrichtung und Verfahren zur vereinfachten Prüfung von Bremsscheiben auf Scheibenschlag und Rundlauf. Hierzu wird eine Welle auf einem Lagerbock drehbar gelagert und an der Welle ist eine Aufnahme für die Bremsscheibe vorgesehen. Die so eingespannte Bremsscheibe wird gedreht und währenddessen an beiden Flachseiten und der Zylinderaußenfläche mittels Messeinrichtungen der Scheibenschlag und der Rundlauf geprüft. Diese Prüfung liefert allerdings nur Ergebnisse, die die Bremsscheibe selbst betreffen. Der korrekte Rundlauf oder Scheibenschlag in Bezug auf eine weitere Fläche, beispielsweise einen Bremssattelsitz, ist nicht vorgesehen. Auch werden über Rundlauf und Scheibenschlag hinaus keine weiteren Werte ermittelt.

Auch die Druckschrift DE 10 2011 002 924 A1 befasst sich mit einem Verfahren zum Erkennen eines Bremsscheibenschlags beim Bremsen. Insoweit ist das Verfahren bereits näher an den praktischen Einsatz der Bremsscheibe herangeführt, als dies bei dem zuvor zitierten Verfahren der Fall ist. Während eines Bremsvorgangs wird nämlich mittels eines Sensors der Bremsdruck oder eine davon abhängige Größe gemessen. Das erhaltene Sensorsignal wird danach in Bezug auf darin enthaltene Schwingungen untersucht. Diese Schwingungen geben dann Rückschluss auf einen Bremsscheibenschlag, der jedoch auch nicht aus der Bremsscheibe selbst herrühren muss. Der Fehler kann auch im gesamten System der Lagerung der Bremsscheibe liegen. Damit ist der Bezug auf eine gegenüber dem rotierenden System Bremsscheibe unbewegliche Fläche hergestellt. Allerdings vermag das vorgeschlagene Verfahren keine weiteren Angaben zu ermitteln, sondern ist rein auf eine im Wesentlichen qualitative Aussage zum Scheibenschlag beschränkt. Vor allem aber können die erkannten Probleme nicht eindeutig auf eine mechanische Fehlstellung der Bremsscheibe zurückgeführt werden.

Die Druckschrift DE 10 2004 017 172 A1 beschreibt eine Lösung, nach der ein Messobjekt vermessen werden kann. Dabei ist zumindest eine Referenzstruktur zur Definition eines objektfesten Objektkoordinatensystems vorgesehen, sodass mithilfe einer Auswerteeinheit letztlich eine vollständige Kontur des Messobjekts erfasst werden kann. Mit der Ermittlung der vollständigen Kontur des Messobjekts können aber keine Aussagen über Rundlauf oder ähnliche relevante Daten der rotierenden Fläche in Bezug auf eine unbewegliche Fläche getroffen werden.

In ähnlicher Weise ermöglicht die Lösung gemäß Druckschrift DE 20 2005 018 753 U1 mit der dort offenbarten, Profilsensoren aufweisenden Messeinrichtung zur geometrischen Qualitätsprüfung von Radsätzen für Schienenfahrzeuge das Laufprofil eines Schienenrads abzubilden, das als kompletter Radsatz in die Messeinrichtung eingesetzt wird. Allerdings können auch hier keinerlei Aussagen in Bezug auf eine unbewegliche Fläche getroffen werden, beispielsweise in Bezug auf die spätere Lagerung des Radsatzes im Wagen.

Die Druckschrift DE 10 2014 006 151 A1 beschreibt ein Verfahren zur Messung des Rundlaufs einer Werkzeugmaschine sowie eine für die Durchführung des Verfahrens ausgebildete Werkzeugmaschine. Eine mit optischer Messstrahlung arbeitende Einrichtung, insbesondere als interferonmetrische Abstandsmessung, erfasst Abweichungen vom Rundlauf der Werkzeugmaschine. Mittels einer automatisierten Vorstellung von Ausgleichsgewichten innerhalb des Spannfutters oder der Hauptspinne der Werkzeugmaschine lassen sich die so ermittelten Rundlaufabweichungen über geeignete Aktoren unmittelbar und während der Bearbeitung eines Werkstücks kompensieren.

Aus der Druckschrift EP 1 074 323 A1, die ebenfalls den Bereich Werkzeugmaschinen betrifft, ist eine Vorrichtung mit einem justierbaren Einspannsystem, mit dem das zentrierte Halten eines Werkstückes bezüglich seiner Rotationsachse möglich ist, bekannt. Der Rundlauf des Einspannsystems wird durch einen Abstandssensor gemessen. Um eine präzise Zentrierung zu ermöglichen, ist es vorgesehen, das Einspannsystem automatisch gesteuert relativ zur Drehlagereinrichtung zu verschieben. Die vorgeschlagene Vorrichtung ermöglicht aber ausschließlich den Rundlauf zu prüfen, ohne weitere relevante Daten ermitteln zu können.

Zur Messung des Rundlaufs an Werkzeugmaschinen sind zahlreiche Lösungen bekannt so beispielsweise aus den Druckschriften DE 17 87 380 U, DE 197 53 426 A1 oder DE 32 33 914 A1.

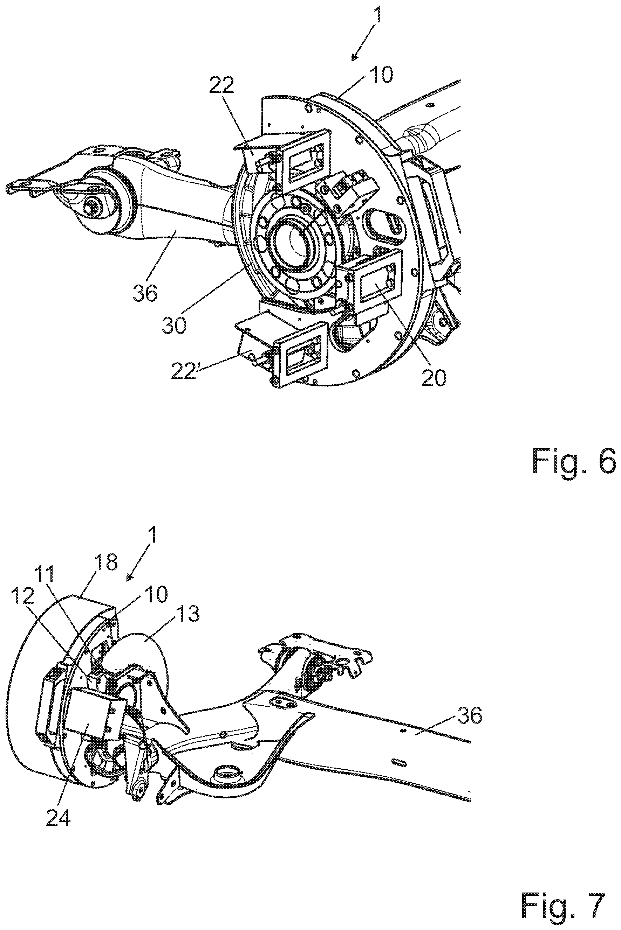

Die Druckschrift WO 99/63353 A1 offenbart eine Kalibriereinrichtung (siehe S. 5, Z. 27 " ... calibrated surface ... ", mit z. B. Fig. 6), die einen Einstellmeister (Fig. 6), umfassend eine in den erforderlichen Toleranzgrenzen maßhaltige, parallel zur Ausrichtung eines Rotationskörpers ebene Fläche, aufweist.

Die Druckschrift DE 10 2015 014 840 A1 offenbart einen Einstellmeister der eine in den erforderlichen Toleranzgrenzen maßhaltige, parallel ausgerichtete ebene Normalfläche aufweist (siehe Abs. 19, 23 und Fig. 2). Die Druckschrift offenbart jedoch keine Kalibriereinrichtung, umfassend einen Verbindungssitz und einen Einstellmeister, der eine in den erforderlichen Toleranzgrenzen maßhaltige, parallel zu dem Verbindungssitz ausgerichtete ebene Normalfläche aufweist. Somit sind keine Entfernungssensoren und/oder eine verbundene Auswerteeinrichtung auf die Normalfläche abgleichbar.

Es ist daher Aufgabe der vorliegenden Erfindung, ein Verfahren und eine Vorrichtung zur Ermittlung einer Lageabweichung, zumindest von Achsenrechtwinkligkeit und Rotationsflächenschlag einer rotierenden Fläche in Bezug auf eine gegenüber dem rotierenden System unbewegliche Fläche vorzuschlagen,

Die Aufgabe wird gelöst durch ein Verfahren zur gleichzeitigen Ermittlung von Achsenrechtwinkligkeit und Rotationsflächenschlag eines um eine Rotationsachse rotationsfähigen Rotationskörpers gegenüber einer Bezugsfläche. Nach einer vorteilhaften Weiterbildung wird auch die Flächenparallelität beiden Flachseiten des Rotationskörpers ermittelt, die demnach ein tolerables Maß an Dickenschwankungen nicht überschreitet. Die Rotationsachse ist bevorzugt senkrecht zu der Bezugsfläche ausgerichtet, insbesondere wenn es sich bei der Bezugsfläche um einen Bremsattelsitz und bei dem Rotationskörper um eine Bremsscheibe handelt.

Nach der Erfindung ist es vorgesehen, dass wenigstens zwei in Bezug auf die Bezugsfläche ortsfeste Entfernungssensoren mit Messrichtung senkrecht zu und in Richtung einer ersten Flachseite des Rotationskörpers vorgesehen sind und die Entfernung zu der Flachseite messen. Die Entfernungssensoren übertragen bei der Drehung des Rotationskörpers ermittelte Entfernungen zu verschiedenen Orten zu der ersten Flachseite des Rotationskörpers einschließlich der Umdrehungswerte bzw. der jeweiligen Drehwinkel an eine Auswerteeinrichtung, aus denen eine Achsenrechtwinkligkeit und ein Rotationsflächenschlag der Flachseiten des Rotationskörpers sowie eine Flächenparallelität ermittelbar sind. Es ist zudem vorgesehen, dass vor der Feststellung des Rotationsflächenschlags und der Achsenrechtwinkligkeit zuerst die Winkelabweichung der Flachseiten des Rotationskörpers ermittelt wird. Bei einer vereinfachten Ausführung wird auf die

Umdrehungswerte bzw. der jeweiligen Drehwinkel verzichtet und stattdessen Minimum und Maximum der gemessenen Entfernungen, damit einer größten und einer kleinsten Winkelabweichung, in die Berechnungen der Auswerteinrichtung einfließen gelassen.

Eine rotationsfähige Rotationsfläche gegenüber einer Bezugsfläche im Sinne der vorliegenden Erfindung ist z. B. eine Schiffsschraube, die als Rotationsfläche gegenüber dem Lagerblock im Schiffsköper drehbeweglich ist. Weitere Beispiels sind der Rotor einer Windenergieanlage als Rotationsfläche gegenüber der Gondel, der Rotor eines Hubschraubers, eine Gas- oder Dampfturbine, ein Strahltriebwerk.

Indem die Achsenrechtwinkligkeit und der Rotationsflächenschlag der Flacheiten des Rotationskörpers gegenüber der Bezugsfläche innerhalb vorgegebener Toleranzen bleiben und dies auch effektiv und schnell überprüft werden kann, wird die Funktionssicherheit der betreffenden Anwendungen erheblich verbessert. Im Falle einer Scheibenbremse führen nämlich zu große Abweichungen in der Achsenrechtwinkligkeit gegenüber dem Bremssattel zu unerwünschten Schwingungen, sobald die Bremse betätigt wird und die Bremsklötze an die Bremsscheibe anlegen. Mit dem erfindungsgemäßen Verfahren kann schon vor dem Einbau der Achsschenkelanordnung oder der Achsanordnung festgestellt werden, ob Toleranzen überschritten worden sind. In einem solchen Fall wird die fehlerhafte Baugruppe nicht erst eingebaut, sondern sofort überarbeitet, bis die vorgesehenen Toleranzen eingehalten werden. Kostspielige Nacharbeiten am bereits fertig gestellten Fahrzeug oder Reklamationen werden vermieden.

Es ist weiterhin vorgesehen, dass wenigstens ein weiterer Entfernungssensor vorgesehen und auf eine zweite Flachseite des Rotationskörpers ausgerichtet ist. Werden dessen Messwerte mit denen eines auf die erste Flachseite gerichteten Sensors in einer Auswerteinrichtung kombiniert, so ist zusätzlich auch die Flächenparallelität des Rotationskörpers ermittelbar und Dickenschwankungen können festgestellt werden.

Eine vorteilhafte Weiterbildung der Erfindung sieht vor, dass wenigstens ein Entfernungssensor als Lasermesstaster vorgesehen ist. Alternativ hierzu kommen weitere Methoden der Entfernungsmessung in Betracht, wie z. B. mittels einer Radarstrahlung.

Als besonders vorteilhaft hat es sich jedoch erwiesen, wenn wenigstens ein Entfernungssensor als kapazitiver Näherungssensor vorgesehen ist. Dadurch können beispielsweise auch Bremsscheiben aus Keramik vermessen werden. Zudem ist die Genauigkeit sehr hoch, bis auf 10 nm Abweichung kann gemessen werden. Weiterhin beansprucht ein kapazitiver Näherungssensor nur einen sehr kleinen Bauraum, so dass die gesamte Vorrichtung stark verkleinert werden kann.

Eine bevorzugte Anwendung der vorliegenden Erfindung sieht vor, dass als Rotationsfläche eine an eine Achsschenkelanordnung oder einer Achsanordnung montierte Bremsscheibe einer Scheibenbremse vorgesehen ist, an der die Ermittlung von Achsenrechtwinkligkeit und Rotationsflächenschlag sowie auch Flächenparallelität der Bremsscheibe gegenüber einem Bremssattelsitz als der Bezugsfläche im Sinne der vorliegenden Erfindung vorgesehen ist. Die Ebene des Bremssattelsitzes, die demnach eine Bezugsfläche darstellt, wird erfindungsgemäß in den Kipppunkt an der Rotationsachse projiziert.

Besondere Vorteile sind zu erwarten, wenn wenigstens drei Entfernungssensoren, davon zwei an einer Flachseite der Bremsscheibe, vorgesehen sind, die mit dem Bremssattelsitz starr verbindbar sind und bei der Drehung der Bremsscheibe ein Messergebnis an eine Auswerteeinrichtung liefern können. Die Messung bei Drehung der Bremsscheibe sorgt dafür, dass die maximale Fehlstellung, die Winkelabweichung, ermittelt werden kann, während bei herkömmlicher Messung im Stand nur die momentan in der jeweiligen Stellung der Bremsscheibe auftretende Winkelabweichung ermittelt werden kann.

Ein weiterer Aspekt der Erfindung betrifft eine Vorrichtung zur gleichzeitigen Ermittlung von Achsenrechtwinkligkeit und Rotationsflächenschlag einer um eine Rotationsachse rotationsfähigen Rotationsfläche gegenüber einer Bezugsfläche. Nach der Erfindung sind wenigstens zwei in Bezug auf die Bezugsfläche ortsfeste Entfernungssensoren angeordnet und eine Messrichtung senkrecht zu und in Richtung einer ersten Flachseite des Rotationskörpers aufweisen, wobei die Entfernungssensoren ermittelte Entfernungen zu der vermessenen Flachseite des Rotationskörpers an eine Auswerteeinrichtung übertragen werden. Die Auswerteeinrichtung ist so ausgeführt, dass sie eine Achsenrechtwinkligkeit und einen Rotationsflächenschlag des Rotationskörpers sowie, bei Einsatz eines dritten Entfernungssensors auf der gegenüberliegenden zweiten Flachseite, eine Flächenparallelität ermitteln kann. In einer bevorzugten Ausführungsform ist die Rotationsachse des Rotationskörpers senkrecht zu der Bezugsfläche ausgerichtet. Demnach ist es vorteilhaft, wenn erste Entfernungssensoren an einer ersten Flachseite und/oder zweite Entfernungssensoren an einer zweiten Flachseite der Bremsscheibe wirkend angeordnet sind.

Eine besonders vorteilhafte Ausführungsform sieht vor, dass wenigstens drei Entfernungssensoren auf der ersten Flachseite, z. B. einer Innenseite, und zwei Entfernungssensoren auf der zweiten Flachseite, z. B. Außenseite, der Bremsscheibe wirkend vorgesehen sind. Mit fünf Entfernungssensoren können unterschiedliche Durchmesser von Bremsscheiben auf einer Messeinrichtung geprüft werden, indem die jeweils dem Rand der Bremsscheibe am nächsten liegenden Sensoren zur Messung aktiviert bzw. abgefragt werden. Bevorzugt ist ein Abstand von 10 mm vom Rand der Bremsscheibe für den randnächsten Entfernungssensor.

Weiterhin hat es sich für den wichtigen Anwendungsfall Scheibenbremse als günstig erweisen, wenn die Messrichtung senkrecht zu der Bezugsfläche verläuft.

Vorteilhafterweise ist wenigstens ein Entfernungssensor als Lasermesstaster ausgeführt oder Radarstrahler ausgeführt. Besondere Vorteile resultieren, wenn wenigstens ein Entfernungssensor als kapazitiver Näherungssensor ausgeführt ist. Dadurch können auch Bremsscheiben aus Keramik vermessen werden. Zudem ist die Genauigkeit sehr hoch, bis auf 10 nm kann gemessen werden. Weiterhin beansprucht ein kapazitiver Näherungssensor nur einen sehr kleinen Bauraum, so dass die gesamte Vorrichtung stark verkleinert werden kann.

Weitere Vorteile ergeben sich, wenn eine Vielzahl von Entfernungssensoren auf der Innenseite und eine Vielzahl von Entfernungssensoren auf der Außenseite der Bremsscheibe wirkend vorgesehen sind.

Es hat sich zudem als vorteilhaft erwiesen, wenn jeweils gesonderte Ausführungsformen für durchgehende Achse, eine Achsanordnung, und Einzelradaufhängung, eine Achsschenkelanordnung, vorgesehen sind. Bei einer durchgehenden Achse, insbesondere einer Hinterachse, wird die gesamte Achsbaugruppe in die erfindungsgemäße Vorrichtung eingelegt, währenddessen bei Einzelradaufhängung die Achsschenkelanordnung jeder Fahrzeugseite gesondert in die Vorrichtung eingelegt und mit dem Gehäuse, das die Entfernungssensoren trägt, verbunden wird. Für jede Fahrzeugseite ist bevorzugt eine gesonderte Vorrichtung bzw. ein gesondertes Gehäuse vorgesehen.

Zur Lösung der erfindungsgemäßen Aufgabe trägt auch eine Kalibriereinrichtung bei, die einen Einstellmeister, umfassend als eine in den erforderlichen Toleranzgrenzen maßhaltige, parallel zur Ausrichtung des Rotationskörpers ebene Fläche, aufweist und mit der Vorrichtung, wie zuvor beschrieben, verbindbar ist. Die Entfernungssensoren und/oder die verbundene Auswerteeinrichtung sind dadurch abgleichbar. Ein Normal, ausgebildet als eine maßhaltige Bremsscheibe oder eine veränderbare Einrichtung zur Simulation von Bremsscheiben unterschiedlicher Größe, dient zur Überprüfung des Einstellmeisters und der gesamten Vorrichtung.

Als besonders günstig hat es sich erwiesen, wenn der Einstellmeister aktiv beweglich mit der Vorrichtung, wie zuvor beschrieben, in der Weise verbunden ist, dass er selbsttätig in den Messbereich eingeschwenkt und die Vorrichtung kalibriert werden kann. Dies geschieht beispielsweise in regelmäßigen Zeitabständen und/ oder in Abhängigkeit von äußeren Faktoren wie Erschütterungen und Temperaturänderungen. Eine solche automatisierbare Kalibrierfunktion ist insbesondere dann von Bedeutung, wenn die Vorrichtung in der Serienfertigung innerhalb einer weitgehend automatisierten Fertigung zum Einsatz kommt.

Ein Aspekt der Erfindung betrifft daher zudem ein Kalibrierverfahren zur Kalibrierung der erfindungsgemäßen Vorrichtung, wie vorstehend beschrieben, und damit zur Sicherung stets korrekter Messergebnisse.

Anhand der Beschreibung von Ausführungsbeispielen und ihrer Darstellung in den zugehörigen Zeichnungen wird die Erfindung nachfolgend näher erläutert. Es zeigen:
Fig. 1: eine schematische Seitenansicht einer Ausführungsform einer erfindungsgemäßen Vorrichtung zur gleichzeitigen Ermittlung von Achsenrechtwinkligkeit und Rotationsflächenschlag sowie Flächenparallelität mit Darstellung der Lage einer um eine Rotationsachse rotationsfähigen Rotationsfläche gegenüber einer Bezugsfläche;
Fig. 2: eine schematische Frontansicht einer Ausführungsform einer erfindungsgemäßen Vorrichtung zur gleichzeitigen Ermittlung von Achsenrechtwinkligkeit und Rotationsflächenschlag sowie Flächenparallelität;
Fig. 3: eine schematische perspektivische Ansicht einer Ausführungsform einer erfindungsgemäßen Vorrichtung zur gleichzeitigen Ermittlung von Achsenrechtwinkligkeit und Rotationsflächenschlag sowie Flächenparallelität;
Fig. 4: eine schematische Darstellung der Funktion einer erfindungsgemäßen Vorrichtung zur gleichzeitigen Ermittlung von Achsenrechtwinkligkeit und Rotationsflächenschlag sowie Flächenparallelität;
Fig. 5: eine schematische Frontansicht einer Ausführungsform einer erfindungsgemäßen Vorrichtung zur gleichzeitigen Ermittlung von Achsenrechtwinkligkeit und Rotationsflächenschlag sowie Flächenparallelität einschließlich Auswerteeinrichtung und Kalibriereinrichtung;
Figuren 6 und 7: schematische perspektivische Ansichten einer Ausführungsform einer erfindungsgemäßen Vorrichtung zur gleichzeitigen Ermittlung von Achsenrechtwinkligkeit und Rotationsflächenschlag sowie Flächenparallelität beim Einsatz an einer Achsanordnung;
Fig. 8 und 9: eine schematische perspektivische Ansicht einer Ausführungsform einer erfindungsgemäßen Vorrichtung zur gleichzeitigen Ermittlung von Achsenrechtwinkligkeit und Rotationsflächenschlag sowie Flächenparallelität an einer Achsschenkelanordnung bei geschlossener bzw. geöffneter Abdeckung; und
Figuren 10 und 11: eine Achsanordnung 36 mit einer Ausführungsform einer erfindungsgemäßen Vorrichtung; und
Figuren 12a bis 12c: schematische Darstellung der Lagetoleranzen im Sinne der vorliegenden Erfindung: Achsenrechtwinkligkeit, Scheibenschlag und Flächenparallelität.

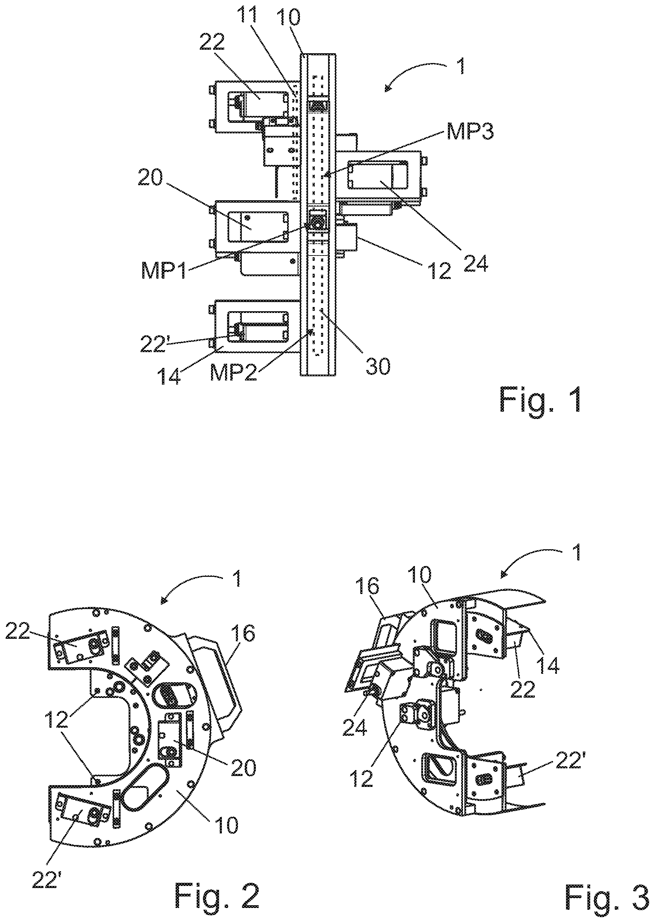

Fig. 1 zeigt eine schematische Seitenansicht einer Ausführungsform einer erfindungsgemäßen Vorrichtung 1 zur gleichzeitigen Ermittlung von Achsenrechtwinkligkeit und Rotationsflächenschlag sowie Flächenparallelität. Zugleich ist die Lage eines um eine Rotationsachse rotationsfähigen Rotationskörpers 30 gegenüber einer mit dem Gehäuse 10 verbundenen Bezugsfläche 11 erkennbar. Im dargestellten Ausführungsbeispiel ist als Bezugsfläche 11 ein Bremssattelsitz einer Achsanordnung 36 oder eine Achsschenkelanordnung 38 (vergleiche Figuren 6 bis 11) vorgesehen. Bezugsfläche 11 und Rotationskörper 30 sind als unsichtbare Kanten durch gestrichelte Linien dargestellt, weil sie durch das Gehäuse 10 verdeckt werden. Die Verbindung des Gehäuses 10 mit der Bezugsfläche 11 erfolgt über Verbindungselemente 12, bevorzug durch Verschraubung oder Verspannung durch Spannmittel.

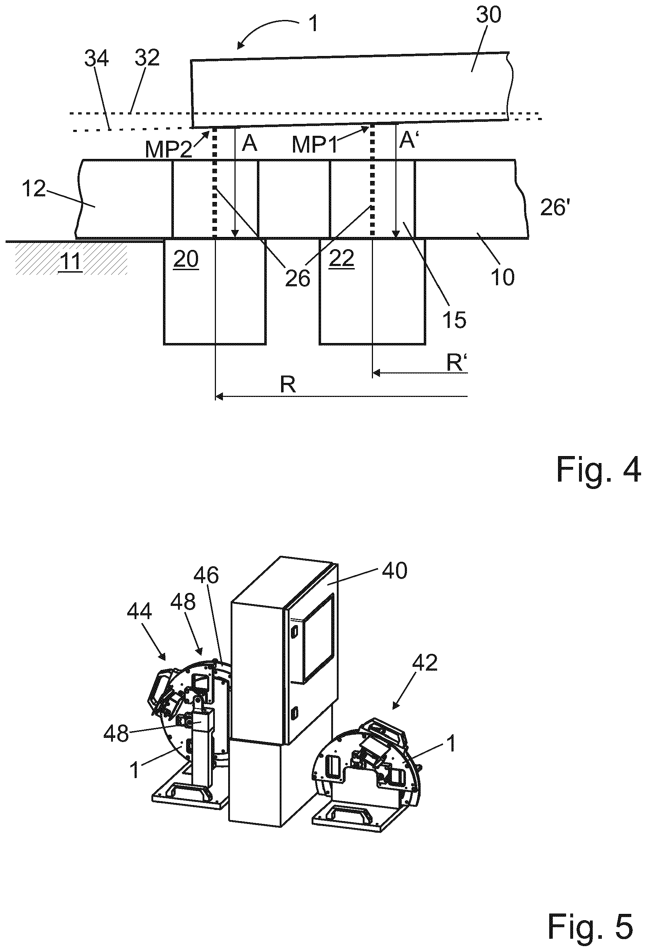

Dementsprechend ist der Rotationskörper 30 eine Bremsscheibe, in der Ansicht als verdeckte Kante gestrichelt dargestellt, da sie durch das Gehäuse 10 verdeckt ist. An einer ersten Flachseite, einer Oberfläche des Rotationskörpers 30 werden durch die Entfernungssensoren 20, 22 und 24 die Messpunkte MP1, MP2 und MP3 vermessen. Neben dem Entfernungssensor 22 ist auch ein Entfernungssensor 22' vorgesehen. Welche der beiden Entfernungssensoren jeweils zum Einsatz kommt, hängt vom Durchmesser des Rotationskörpers 30 ab, da die Messung am Messpunkt MP2 in der Nähe des äußeren Umfangs erfolgen soll. Die gemessenen Werte werden an eine Auswerteeinrichtung 40 (vergleiche Fig. 5) übertragen. Die Entfernungssensoren 20, 22 und 24 sind mittels jeweils einer Sensorhalterung 14 mit dem Gehäuse 10 fest verbunden.

Fig. 2 zeigt eine schematische Frontansicht einer Ausführungsform einer erfindungsgemäßen Vorrichtung 1 zur gleichzeitigen Ermittlung von Achsenrechtwinkligkeit und Rotationsflächenschlag sowie Flächenparallelität, wobei die Sensoren 20 und 22 bzw. 22' am Gehäuse 10 erkennbar sind. Das Gehäuse 10 ist weiterhin mit einem Handgriff 16 versehen, damit die Vorrichtung 1 leicht an den Montageort verbracht werden kann. Sobald die Vorrichtung 1 auf den Montageort, insbesondere eine Achsschenkelanordnung oder eine Achsanordnung und deren Bremssattelsitz, aufgesetzt ist, erfolgt die Verbindung zwischen diesen und der Vorrichtung 1 über Verbindungselemente 12. Wie in der Darstellung erkennbar ist, weisen die Verbindungselemente 12 zahlreiche Bohrungen auf und sind damit zum Einsatz an unterschiedlichen Achsanordnungen oder Achsschenkeln, insbesondere dem jeweils dort vorgesehenen Bremssattelsitz, geeignet.

Fig. 3 zeigt eine schematische perspektivische Ansicht einer Ausführungsform einer erfindungsgemäßen Vorrichtung 1 zur gleichzeitigen Ermittlung von Achsenrechtwinkligkeit und Rotationsflächenschlag sowie Flächenparallelität, wobei die dargestellte Ausführungsform derjenigen aus Fig. 2 entspricht. Auch in der perspektivischen Darstellung ist das Gehäuse 10 mit dem Handgriff 16 zu erkennen, ebenso die Sensorhalterungen 14 mit den Entfernungssensoren 22, 22' und 24. Das Verbindungselement 12 dient zur Verbindung mit der Bezugsfläche 11, vorliegend dem Bremssattelsitz der Achsschenkelanordnung oder der Achsanordnung.

Fig. 4 zeigt eine schematische Darstellung der Funktion einer erfindungsgemäßen Vorrichtung 1 zur Ermittlung einer Lageabweichung einer um eine Rotationsachse rotationsfähigen Rotationsfläche gegenüber einer Bezugsfläche, hier einer Bremsscheibe 30 gegenüber einem Bremssattelsitz. Die Bremsscheibe 30 ist nur mit einem Ausschnitt, der nicht ihre Rotationsachse zeigt, dargestellt. Die Bremsscheibe 30 ist gegenüber einer Nulllinie 32, die parallel zum Bremssattelsitz verläuft und eine Normalposition verkörpert, um eine Winkelabweichung 34 geneigt. Um die Größe der Winkelabweichung 34 zu ermitteln und festzustellen, ob ein vorgesehener Toleranzbereich überschritten ist, wird ein Abstand A, A' zu einer ersten Flachseite der Bremsscheibe 30 an zwei verschiedenen Messpunkten MP1 und MP2 durch die Entfernungssensoren 20 und 22 ermittelt. Hierzu dient ein von den Entfernungssensoren 20, 22 bzw. 22' ausgehendes Sensorsignal 26 bzw. 26', das gegen die Bremsscheibe 30 gerichtet ist. Das Sensorsignal 26, 26' erreicht die Bremsscheibe 30 an den Messpunkten MP1 und MP2 durch das Gehäuse 10 hindurch, das hierzu mit Ausnehmungen 15 versehen ist. Das Gehäuse 10 ist mit dem Verbindungsbereich 12 mit dem Bremssattel 11 verbunden. Die Entfernungssensoren 20 und 22 bzw. die Messpunkte MP1 und MP2 sind im unterschiedlichen Abständen angeordnet, nämlich im Radius R, R' von der Rotationsachse der Bremsscheibe 30.

Zur klaren Zuordnung der ermittelten Winkelabweichung 34 zu einer tatsächlichen Winkelabweichung der Rotationsachse von der Senkrechten zum Bremssattelsitz 11 (Nulllinie 32) reicht es nicht aus, die Winkelabweichung nur an zwei einzelnen Messpunkten MP1, MP2 zu ermitteln. Vor diesem Hintergrund wird die Bremsscheibe 30 während der Messung wenigstens einmal, bevorzugt mehrfach um ihre Rotationsachse gedreht. Dabei werden der Auswerteeinrichtung 40 (vergleiche Fig. 5) neben den Messwerten der Entfernungssensoren 20, 22 bzw. 22' auch der, beispielsweise von einem Antrieb der Bremsscheibe 30 oder einem Drehwinkelsensor übermittelte, momentane Drehwinkel im Augenblick der Entfernungsmessung übertragen. Als ein Drehwinkelsensor kann z. B. ein Felgendummi verwendet werden, welcher an der Stelle, wo später im Fahrzeug eine Felge montiert wird, auf die Bremsscheibe montierter wird. Hierzu ist er mit entsprechenden, durch den Drehwinkelsensor auslesbaren Marken auf dem Umfang versehen. Als Marken kommen im einfachsten Fall die fünf Schrauben in Betracht.

Ein Messprogramm, das innerhalb der Auswerteinrichtung 40 abläuft, fragt die Messwerte der jeweiligen Abstände zur Bremsscheibe über die Sensoren 20, 22 bzw. 22' sowie 24, sofern vorhanden, ab und berechnet daraus sowie aus den Umdrehungsdaten bzw. dem Drehwinkel der Bremsscheibe, einem weiteren Messwert, die Winkelabweichungen der Bremsscheibe gegenüber der Bremssattelsitz 11 und den Scheibenschlag, den Winkelversatz der Bremsscheibe 30 gegenüber ihrer Rotationsachse. So kann durch Ermittlung der drehwinkelabhängigen Winkelabweichung 34 ein vollständiges Bild über den Zustand der Bremsscheibe 30 hinsichtlich Achsenrechtwinkligkeit, Scheibenschlag und Flächenparallelität gegenüber dem Bremssattelsitz 11 der Achsschenkelanordnung 38 oder der Achsanordnung 36 erlangt werden.

Um auch Kenntnis über die Flächenparallelität der Bremsscheibe 30 zu erlangen, ist ein hier nicht dargestellter Entfernungssensor 24 auf der gegenüberliegenden Flachseite der Bremsscheibe 30 vorgesehen, der einen Messpunkt MP3 vermisst. Dieser ist beispielsweise unmittelbar gegenüber dem Messpunkt MP2 angeordnet, so dass auch hierbei mittels der Auswerteeinrichtung 40 die Messwerte der Messpunkte MP2 und MP3 in der Weise ausgewertet werden können, dass Abweichungen in der Flächenparallelität, also der Dicke der Bremsscheibe, über den gesamten Umfang zumindest im Bereich der Messpunkte festgestellt werden können. Vorteilhafterweise stehen zwei Entfernungssensoren für den Messpunkt MP2 auch zwei korrespondierende Entfernungssensoren für den Messpunkt MP3 gegenüber. Durch weitere Entfernungssensoren ergibt sich ein noch genaueres Bild der Flächenparallelität.

Fig. 5 zeigt eine schematische Frontansicht einer Ausführungsform einer erfindungsgemäßen Vorrichtung 1 zur gleichzeitigen Ermittlung von Achsenrechtwinkligkeit und Rotationsflächenschlag bzw. auch Flächenparallelität einschließlich Auswerteeinrichtung 40 und Kalibriereinrichtung 44. Zudem ist eine Ruheposition 42 gezeigt, in der die Vorrichtung 1 sicher abgelegt werden kann, wenn keine Messung vorgesehen ist.

Die Hauptfunktion der Auswerteeinrichtung 40 ist bereits zu den vorangegangenen Figuren beschrieben wurden. Zudem übernimmt die Auswerteeinrichtung 40 aber auch die Kalibrierung der Vorrichtung 1, die in regelmäßigen Abständen erforderlich ist, um stets ein genaues Messergebnis liefern zu können. Hierzu wird anstelle der Bremsscheibe ein Rotationskörper 30 ohne oder mit bekannter Abweichung von der Nulllinie 32 (vergleiche Fig. 4) eingesetzt und durch die Vorrichtung 1 vermessen.

Mittels der gewonnenen Messwerte der Entfernungssensoren 20, 22 bzw. 22' und 24 wird die Vorrichtung 1 kalibriert.

Figuren 6 und 7 zeigt schematische perspektivische Ansichten einer Ausführungsform einer erfindungsgemäßen Vorrichtung 1 zur gleichzeitigen Ermittlung von Flächenparallelität, Achsenrechtwinkligkeit und Rotationsflächenschlag beim Einsatz an einer Achsanordnung 36. Mit der Darstellung in Fig. 6 ist bei geöffnetem Gehäuse 10 neben den Sensoren 20, 22 und 22' auch die Achsanordnung 36 zu erkennen. Diese umfasst den hier nicht sichtbaren Bremssattelsitz, der die Bezugsfläche 11 darstellt, an die das Gehäuse 10 angeschraubt ist. Die bereits montierte Bremsscheibe, die den Rotationskörper 30 bildet, wird nun definiert um ihre Achse gedreht und während dessen die Messwerte der Entfernungssensoren 20 und 22 bzw. 22 an die Auswerteeinrichtung übertragen. Nach der dort erfolgten Auswertung der momentanen Winkelabweichung sind Flächenparallelität, Achsenrechtwinkligkeit und Rotationsflächenschlag der Bremsscheibe gegenüber dem Bremssattelsitz festgestellt. Fig. 7 zeigt dieselbe Situation, jedoch bei geschlossener Abdeckung 18.

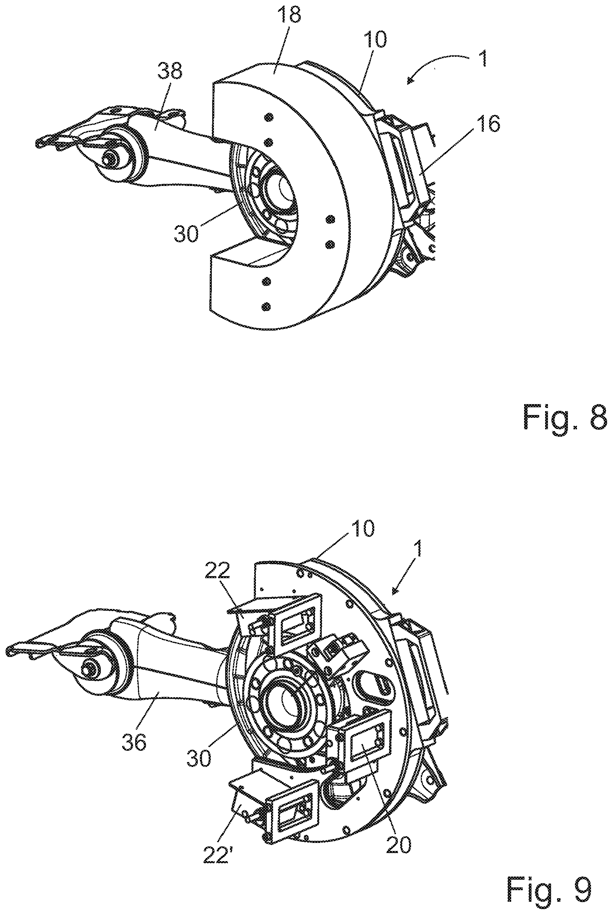

Fig. 8 und 9 zeigt eine schematische perspektivische Ansicht einer Ausführungsform einer erfindungsgemäßen Vorrichtung 1 zur gleichzeitigen Ermittlung von Flächenparallelität, Achsenrechtwinkligkeit und Rotationsflächenschlag an einer Achsschenkelanordnung 38 bei geschlossener bzw. geöffneter Abdeckung 18. Auch der Achsschenkelanordnung 38 umfasst einen Bremssattelsitz zur Befestigung des Gehäuses 10 der Vorrichtung 1, nachdem diese mittels des Handgriffs 16 dort aufgesetzt wurde. Nach der Befestigung kann die Vermessung der Bremsscheibe, des Rotationskörpers 30 beginnen. In Fig. 19 zusätzlich die Sensoren 20, 22 und 22' zu erkennen.

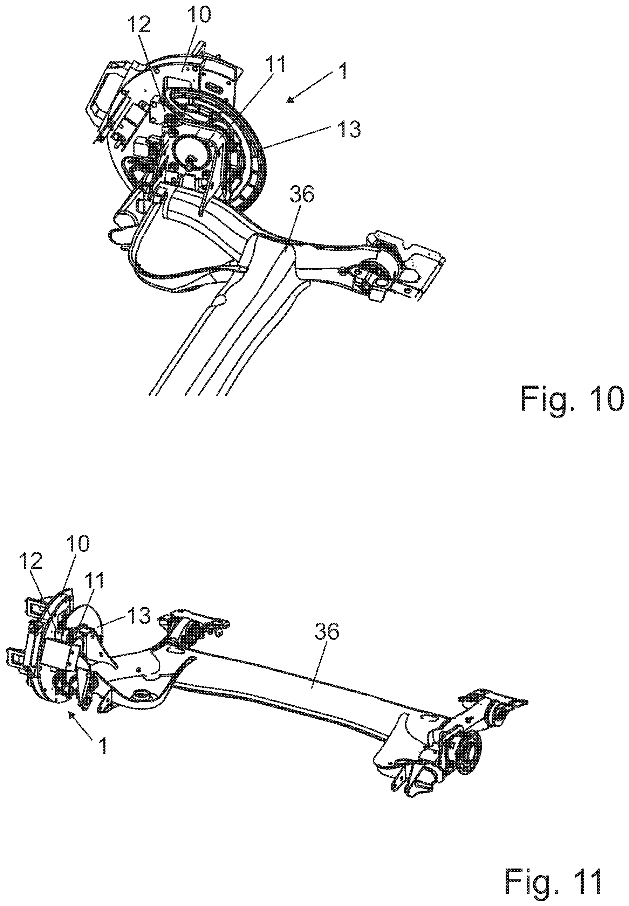

Die Figuren 10 und 11 zeigen eine Achsanordnung 36 mit der Bremsscheibe als Rotationskörper 30 sowie das aufgesetzte und befestigte Gehäuse 10 der Vorrichtung 1. Erkennbar sind wiederum die Ankerplatte 13, der Bremssattelsitz 11 und der Verbindungsbereich 12.

Die Figuren 12a bis 12c verdeutlichen in einer schematische Darstellung die unterschiedlichen Lagetoleranzen, die im Rahmen der vorliegenden Erfindung ermittelt werden. Fig. 12a zeigt die Achsenrechtwinkligkeit, wobei die Rotationsachse des Rotationskörpers 30 rechtwinklig zu der (verlängerten) Bezugsfläche 11 verläuft. Fig. 12b zeigt den Scheibenschlag, d. h. die Rechtwinkligkeit zwischen dem Rotationskörper 30 bzw. dessen Flachseiten und seiner Rotationsachse ist gefordert, Abweichungen führen zum Rotationsflächenschlag. Fig. 12c zeigt die Flächenparallelität des Rotationskörpers 30, beide Flachseiten sind parallel.

### Bezugszeichenliste

- 1: Vorrichtung
- 10: Gehäuse
- 11: Bezugsfläche
- 12: Verbindungselement
- 14: Sensorhalterung
- 15: Ausnehmung
- 16: Handgriff
- 18: Abdeckung
- 20: Entfernungssensor 1
- 22, 22': Entfernungssensor 2
- 24: Entfernungssensor 3
- 26, 26': Sensorsignal
- 30: Rotationskörper, Bremsscheibe
- 32: Nulllinie
- 34: Winkelabweichung
- 36: Achsanordnung
- 38: Achsschenkelanordnung
- 40: Auswerteeinrichtung
- 42: Ruheposition
- 44: Kalibriereinrichtung
- 46: Einstellmeister
- 48: Verbindungssitz
- A, A': Abstand
- MP1: Messpunkt 1
- MP2: Messpunkt 2
- MP3: Messpunkt 3
- R, R': Radius

## Patentansprüche

1. Verfahren zur Ermittlung einer Lageabweichung eines um eine Rotationsachse rotationsfähigen Rotationskörpers (30), umfassend zumindest eine erste Flachseite, gegenüber einer Bezugsfläche (11), **dadurch gekennzeichnet, dass** eine gleichzeitige Ermittlung von zumindest Achsenrechtwinkligkeit und Rotationsflächenschlag der ersten Flachseite des Rotationskörpers (30) erfolgen, wobei wenigstens zwei in Bezug auf die Bezugsfläche ortsfeste Entfernungssensoren (20, 22, 22') senkrecht zu und in Richtung der ersten Flachseite des Rotationskörpers (30) messen, wobei die Entfernungssensoren (20, 22, 22') bei der Drehung des Rotationskörpers (30) ermittelte Entfernungen zu der ersten Flachseite des Rotationskörpers (30) an unterschiedlichen Orten an eine Auswerteeinrichtung (40) übertragen, aus denen in der Auswerteinrichtung unter Berücksichtigung des Drehwinkels des Rotationskörpers (30) um die Rotationsachse eine Achsenrechtwinkligkeit und ein Rotationsflächenschlag des Rotationskörpers (30) ermittelbar sind.

2. Verfahren nach Anspruch 1, wobei wenigstens ein weiterer Entfernungssensor (24) vorgesehen und auf eine zweite Flachseite des Rotationskörpers (30) ausgerichtet ist, so dass auch eine Flächenparallelität des Rotationskörpers (30) ermittelbar ist.

3. Verfahren nach Anspruch 1 oder 2, wobei wenigstens ein Entfernungssensor (20, 22, 22', 24) als Lasermesstaster vorgesehen ist.

4. Verfahren nach einem der vorherigen Ansprüche wobei wenigstens ein Entfernungssensor (20, 22, 22', 24) als kapazitiver Näherungssensor vorgesehen ist.

5. Verfahren nach einem der vorherigen Ansprüche, wobei als Rotationskörper (30) eine an eine Achsschenkelanordnung (38) montierte Bremsscheibe einer Scheibenbremse vorgesehen ist, an der die Ermittlung von Flächenparallelität, Achsenrechtwinkligkeit und Rotationsflächenschlag der Bremsscheibe gegenüber einem Bremssattelsitz als der Bezugsfläche (11) vorgesehen ist.

6. Verfahren nach Anspruch 5, wobei wenigstens drei Entfernungssensoren (20, 22, 22', 24) vorgesehen sind, die mit dem Bremssattelsitz (11) starr verbindbar sind und bei der Drehung der Bremsscheibe (30) ein Messergebnis an eine Auswerteeinrichtung (40) liefern können.

7. Vorrichtung zur gleichzeitigen Ermittlung von Achsenrechtwinkligkeit und Rotationsflächenschlag eines um eine Rotationsachse rotationsfähigen Rotationskörpers (30), umfassend zumindest eine erste Flachseite, gegenüber einer Bezugsfläche, **dadurch gekennzeichnet, dass** wenigstens zwei in Bezug auf die Bezugsfläche (11) ortsfeste Entfernungssensoren (20, 22, 22') angeordnet sind und eine Messrichtung senkrecht zu und in Richtung der ersten Flachseite des Rotationskörpers (30) aufweisen, wobei eine Auswerteeinrichtung (40) vorgesehen sind, an die durch die Entfernungssensoren (20, 22, 22') gemessene Entfernungen zu der ersten Flachseite des Rotationskörpers (30) sowie ein Drehwinkel des Rotationskörpers (30) in Bezug auf die Bezugsfläche (11) übertragen werden, wobei die Auswerteeinrichtung (40) so ausgeführt ist, dass sie aus den übertragenen Werten eine Achsenrechtwinkligkeit und einen Rotationsflächenschlag des Rotationskörpers (30) ermittelt.

8. Vorrichtung nach Anspruch 7, die wenigstens einen weiteren Entfernungssensor (24) umfasst, der auf eine zweite Flachseite des Rotationskörpers (30) gerichtet ist, die Entfernung zu der zweiten Flachseite misst und aus dessen Messwerten eine Flächenparallelität des Rotationskörpers (30) ermittelt werden kann.

9. Vorrichtung nach Anspruch 7 oder 8, wobei wenigstens drei Entfernungssensoren (20, 22, 22') auf die erste Flachseite und zwei Entfernungssensoren (24) auf die zweite Flachseite des Rotationskörpers (30) wirkend vorgesehen sind.

10. Vorrichtung nach einem der Ansprüche 7 bis 9, wobei wenigstens ein Entfernungssensor (20, 22, 22', 24) als Lasermesstaster ausgeführt ist.

11. Vorrichtung nach einem der Ansprüche 7 bis 10, wobei wenigstens ein Entfernungssensor (20, 22, 22', 24) als kapazitiver Näherungssensor ausgeführt ist.

12. Vorrichtung nach einem der Ansprüche 7 bis 11, wobei eine erste Ausführungsform für eine Achsanordnung (36) mit durchgehender Achse, wobei die gesamte Achsbaugruppe in die Vorrichtung (1) eingelegt wird, und eine zweite Ausführungsform für eine Achsschenkelanordnung (38) mit Einzelradaufhängung, wobei die Achsschenkelanordnung (38) jeder Fahrzeugseite gesondert in die Vorrichtung (1) eingelegt wird, vorgesehen sind.

13. Kalibriereinrichtung, die einen Einstellmeister (46), umfassend eine in den erforderlichen Toleranzgrenzen maßhaltige, parallel zur Ausrichtung des Rotationskörpers (30) ebene Fläche, aufweist und mit einer Vorrichtung (1) nach einem der Ansprüche 7 bis 12 verbindbar ist und wobei die Entfernungssensoren (20, 22, 22', 24) und/oder die verbundene Auswerteeinrichtung (40) abgleichbar sind, **dadurch gekennzeichnet, dass** der Einstellmeister (46) aktiv beweglich mit der Vorrichtung (1) in der Weise verbunden ist, dass er selbsttätig in den Messbereich der Entfernungssensoren (20, 22, 22', 24) eingeschwenkt und die Vorrichtung (1) hiernach kalibriert werden kann.

## Claims

1. A method for ascertaining a positional deviation of a rotational body (30), which is rotatable about a rotation axis and comprises at least one first flat face, relative to a reference surface (11), **characterized in that** at least axial perpendicularity and rotational surface runout of the first flat face of the rotational body (30) are ascertained simultaneously, wherein at least two distance sensors (20, 22, 22') that are stationary with respect to the reference surface perform measurements perpendicular to and in the direction of the first flat face of the rotational body (30), wherein the distance sensors (20, 22, 22') transmit distances from the first flat face of the rotational body (30) ascertained at different points during rotation of the rotational body (30) to an evaluation device (40), wherein, based on the distances and taking into account the rotation angle of the rotational body (30) about the rotation axis, an axial perpendicularity and a rotational surface runout of the rotational body (30) can be ascertained in the evaluation device.

2. The method according to claim 1, wherein at least one further distance sensor (24) is provided which is oriented towards a second flat face of the rotational body (30), so that a surface parallelism of the rotational body (30) can also be ascertained.

3. The method according to claim 1 or 2, wherein at least one distance sensor (20, 22, 22', 24) is provided as a laser measuring sensor.

4. The method according to any one of the preceding claims, wherein at least one distance sensor (20, 22, 22', 24) is provided as a capacitive proximity sensor.

5. The method according to any one of the preceding claims, wherein a brake disc of a disc brake installed at a steering knuckle assembly (38) is provided as the rotational body (30) for ascertainment of surface parallelism, axial perpendicularity and rotational surface runout of the brake disc relative to a caliper seat as the reference surface (11).

6. The method according to claim 5, wherein at least three distance sensors (20, 22, 22', 24) are provided which are rigidly attachable to the caliper seat (11) and can provide a measurement result to an evaluation device (40) during the rotation of the brake disc (30).

7. An apparatus for simultaneously ascertaining axial perpendicularity and rotational surface runout of a rotational body (30), which is rotatable about a rotation axis and comprises at least one first flat face, relative to a reference surface (11), **characterized in that** at least two distance sensors (20, 22, 22') are provided which are stationary with respect to the reference surface (11) and which have a measuring direction perpendicular to and in the direction of the first flat face of the rotational body (30), wherein an evaluation device (40) is provided to which distances from the first flat face of the rotational body (30) measured by the distance sensors (20, 22, 22') as well as a rotation angle of the rotational body (30) with respect to the reference surface (11) are transmitted, wherein the evaluation device (40) is configured such that it ascertains an axial perpendicularity and a rotational surface runout of the rotational body (30) from the transmitted values.

8. The apparatus according to claim 7, comprising at least one further distance sensor (24) which is oriented towards a second flat face of the rotational body (30) and measures the distance from the second flat face, so that a surface parallelism of the rotational body (30) can be ascertained from the measured values of the further distance sensor.

9. The apparatus according to claim 7 or 8, wherein at least three distance sensors (20, 22, 22') are provided to act on the first flat face and two distance sensors (24) are provided to act on the second flat face of the rotational body (30).

10. The apparatus according to any one of claims 7 to 9, wherein at least one distance sensor (20, 22, 22', 24) is configured as a laser measuring sensor.

11. The apparatus according to any one of claims 7 to 10, wherein at least one distance sensor (20, 22, 22', 24) is configured as a capacitive proximity sensor.

12. The apparatus according to any one of claims 7 to 11, wherein a first embodiment is provided for an axle assembly (36) with a continuous axle, wherein the entire axle unit is inserted into the apparatus (1), and a second embodiment is provided for a steering knuckle assembly (38) with individual wheel suspension, wherein the steering knuckle assembly (38) of each vehicle side is inserted into the apparatus (1) separately.

13. A calibrating device which includes a master adjuster (46) comprising a planar surface dimensionally accurate to the required tolerance limits and parallel to the orientation of the rotational body (30), and which can be connected to an apparatus (1) according to any one of claims 7 to 12, and wherein the distance sensors (20, 22, 22', 24) and/or the connected evaluation device (40) can be adjusted, **characterized in that** the master adjuster (46) is connected to the apparatus (1) in an actively movable manner such that it can be pivoted into the measuring area of the distance sensors (20, 22, 22', 24) automatically and the apparatus (1) can be calibrated thereafter.

## Revendications

1. Procédé de détermination d'un écart de position d'un corps rotatif (30) capable de rotation autour d'un axe de rotation, comprenant au moins un premier côté plat, par rapport à une surface de référence (11), **caractérisé en ce qu'**une détermination simultanée d'au moins l'orthogonalité axiale et l'excentricité de surfaces de révolution du premier côté plat du corps rotatif (30) a lieu, dans lequel au moins deux capteurs d'éloignement fixes (20, 22, 22') par rapport à la surface de référence mesurent perpendiculairement à et en direction du premier côté plat du corps rotatif (30), dans lequel les capteurs d'éloignement (20, 22, 22') transmettent des éloignements déterminés lors de la rotation du corps rotatif (30) par rapport au premier côté plat du corps rotatif (30) à différents endroits à un dispositif d'évaluation (40), à partir desquels une orthogonalité axiale et une excentricité de surfaces de révolution du corps rotatif (30) peuvent être déterminées dans le dispositif d'évaluation en tenant compte de l'angle de rotation du corps rotatif (30) autour de l'axe de rotation.

2. Procédé selon la revendication 1, dans lequel au moins un autre capteur d'éloignement (24) est prévu et orienté vers un second côté plat du corps rotatif (30) de sorte qu'un parallélisme de surfaces du corps rotatif (30) peut également être déterminé.

3. Procédé selon la revendication 1 ou 2, dans lequel au moins un capteur d'éloignement (20, 22, 22', 24) est prévu en tant que palpeur de mesure à laser.

4. Procédé selon une des revendications précédentes, dans lequel au moins un capteur d'éloignement (20, 22, 22', 24) est prévu en tant que capteur de proximité capacitif.

5. Procédé selon une des revendications précédentes, dans lequel un disque de frein d'un frein à disques monté sur un agencement de fusées d'essieu (38) est prévu en tant que corps rotatif (30), au niveau duquel la détermination du parallélisme de surfaces, de l'orthogonalité axiale et de l'excentricité de surfaces de révolution du disque de frein par rapport à un siège d'étrier de frein en tant que surface de référence (11) est prévue.

6. Procédé selon la revendication 5, dans lequel au moins trois capteurs d'éloignement (20, 22, 22', 24) sont prévus, lesquels peuvent être connectés de manière rigide au siège d'étrier de frein (11) et peuvent livrer un résultat de mesure à un dispositif d'évaluation (40) lors de la rotation du disque de frein (30).

7. Dispositif de détermination simultanée d'orthogonalité axiale et d'excentricité de surfaces de révolution d'un corps rotatif (30) capable de rotation autour d'un axe de rotation, comprenant au moins un premier côté plat, par rapport à une surface de référence, **caractérisé en ce qu'**au moins deux capteurs d'éloignement fixes (20, 22, 22') par rapport à la surface de référence (11) sont disposés et présentent une direction de mesure perpendiculaire à et en direction du premier côté plat du corps rotatif (30), dans lequel un dispositif d'évaluation (40) est prévu, auquel des éloignements mesurés par les capteurs d'éloignement (20, 22, 22') par rapport au premier côté plat du corps rotatif (30) ainsi qu'un angle de rotation du corps rotatif (30) par rapport à la surface de référence (11) sont transmis, dans lequel le dispositif d'évaluation (40) est réalisé de sorte qu'il détermine à partir des valeurs transmises une orthogonalité axiale et une excentricité de surfaces de révolution du corps rotatif (30).

8. Dispositif selon la revendication 7, qui comprend au moins un autre capteur d'éloignement (24) qui est dirigé vers un second côté plat du corps rotatif (30), mesure l'éloignement par rapport au second côté plat et un parallélisme de surfaces du corps rotatif (30) peut être déterminé à partir de ses valeurs de mesure.

9. Dispositif selon la revendication 7 ou 8, dans lequel au moins trois capteurs d'éloignement (20, 22, 22') sont prévus pour agir sur le premier côté plat et deux capteurs d'éloignement (24) sur le second côté plat du corps rotatif (30).

10. Dispositif selon une des revendications 7 à 9, dans lequel au moins un capteur d'éloignement (20, 22, 22', 24) est réalisé en tant que palpeur de mesure à laser.

11. Dispositif selon une des revendications 7 à 10, dans lequel au moins un capteur d'éloignement (20, 22, 22', 24) est réalisé en tant que capteur de proximité capacitif.

12. Dispositif selon une des revendications 7 à 11, dans lequel sont prévus un premier mode de réalisation pour un agencement d'essieux (36) avec essieu continu, dans lequel le bloc d'essieux entier est inséré dans le dispositif (1), et un second mode de réalisation pour un agencement de fusées d'essieu (38) avec une suspension unique, dans lequel l'agencement de fusées d'essieu (38) de chaque côté de véhicule est inséré séparément dans le dispositif (1).

13. Installation d'étalonnage, qui présente un étalon de réglage (46), comprenant une surface de dimensions prescrites dans les limites de tolérance nécessaires, plane parallèlement à l'orientation du corps rotatif (30), et peut être connectée à un dispositif (1) selon une des revendications 7 à 12, et dans laquelle les capteurs d'éloignement (20, 22, 22', 24) et/ou le dispositif d'évaluation connecté (40) peuvent être ajustés, **caractérisée en ce que** l'étalon de réglage (46) est connecté au dispositif (1) de manière activement mobile de telle sorte qu'il pivote automatiquement dans la région de mesure des capteurs d'éloignement (20, 22, 22', 24) et le dispositif (1) peut être étalonné ci-après.
